# EUROPÄISCHE PATENTSCHRIFT

(11) **EP 3 529 515 B1**
(45) Veröffentlichungstag und Bekanntmachung des Hinweises auf die Patenterteilung: **22.07.2020**
(21) Anmeldenummer: 17768764.7
(22) Anmeldetag: 15.09.2017
(51) Int. Cl.: F16G 13/16, B65H 75/44, H02G 3/02, H02G 3/04, F16G 13/20, H02G 11/02

(54) **SCHNELLLAUF-HUBVORRICHTUNG MIT VERSORGUNGSLEITUNG UND ENERGIEFÜHRUNGSKETTE HIERFÜR**
HIGH SPEED LIFTING DEVICE WITH A SUPPLY LINE, AND POWER TRANSMISSION CHAIN HEREFOR
DISPOSITIF DE LEVAGE À GRANDE VITESSE COMPRENANT UNE LIGNE D'ALIMENTATION ET CHAÎNE PORTE-CÂBLES ASSOCIÉE

(30) Priorität: 18.10.2016 DE 202016105840 U
(43) Veröffentlichungstag der Anmeldung: 28.08.2019
(73) Patentinhaber: Igus GmbH, 51147 Köln (DE)
(72) Erfinder: THEISS, Georg, 50678 Köln (DE)
(74) Vertreter: Lippert Stachow Patentanwälte Rechtsanwälte
(86) Internationale Anmeldenummer: PCT/EP2017/073283
(87) Internationale Veröffentlichungsnummer: WO 2018/072941

(56) Entgegenhaltungen:
- EP-A1- 2 535 303
- DE-A1- 10 017 514
- DE-U1-202015 100 484

## Beschreibung

Die Erfindung betrifft eine Schnelllauf-Hubvorrichtung für einen langgestreckten, flexiblen Körper, wie z.B. eine Gliederschürze einer Abdeckung, ein Lamellenpanzer-Torblatt eines Hubtors, oder dergleichen und auch allgemein für eine Kette oder einen Strang zur Kraftübertragung in einer Maschine, insbesondere eine Zug-/Schubkette. Die Erfindung betrifft ebenfalls eine Energieführungskette für eine derartige Vorrichtung.

Der Begriff Körper ist vorliegend im weitesten Sinne aufzufassen. Er umfasst eine Gliederkette im Sinne einer verketteten Reihenfolge gliederartiger Elemente beliebiger Raumgestalt, d.h. nicht nur aber auch eine kraftübertragende Antriebskette. Die Elemente sollten dabei zwecks Schnelllaufeigenschaft in Laufrichtung hinreichend zug- und druckfest ausgeführt sein und gegeneinander schwenkbar sein. Der Begriff Körper umfasst vorliegend jedoch auch einen flexiblen, einteiligen Strang oder ein flexibles, einteiliges Band, insbesondere zur Kraftübertragung.

Zum Auf- und Abspulen bzw. Auf- und Abrollen ist es in vielen Gebieten gängige Praxis, den jeweiligen Körper - wenn dieser aus platzsparend ein- und ausfahren soll - auf einer trommelartigen Welle auf- bzw. von dieser abzuwickeln. Ein bekanntes Beispiel hierfür ist der Rollladen für Fensteröffnungen. Dieses Prinzip bringt jedoch unterschiedliche Nachteile mit sich, u.a. statische Probleme aus ungleichmäßiger Belastung durch den Polygoneffekt starrer Elemente, sowie kinematische Probleme, wie z.B. eine drehstellungsabhängige Hubgeschwindigkeit, denn beim üblichem Antrieb der Achse der Wickelwelle ändert die Laufgeschwindigkeit mit der Drehstellung.

Vor allem aber ist beim Trommelprinzip die maximal erzielbare Hub- bzw. Laufgeschwindigkeit aufgrund der am Körper auftretenden Reibungs- und Druckkräften einerseits und der zusätzlichen Trägheit, insbesondere der bewickelten Welle bzw. Trommel, andererseits in der Regel stark begrenzt. Dies gilt insbesondere bei langen und/oder schweren Körpern.

Im Bereich der Schnelllauftore zum Abschluss von Gebäudeöffnungen ist für vergleichsweise hohe Hubgeschwindigkeiten (Schnelllauf), der sogenannte Spiralbeschlag entwickelt worden. Es handelt sich dabei um eine gattungsgemäße Führung mit einem Linearabschnitt üblicher Bauart für den linear bzw. geradlinig geführten Vor- und Rückhub bzw. das gewünschte Verfahren des Körpers, sowie mit einem speziellen Spiralabschnitt, der insbesondere zum Ein- und Ausfahren in bzw. aus einem kompakten Speicherbereich dient. Entscheidend ist dabei die besondere Gestaltung des Spiralabschnitts, in welchem ein Teil oder der gesamte Körper platzsparend aufgenommen wird, nämlich in mehreren gegeneinander berührungsfrei beabstandeten im Wesentlichen spiralförmig nach innen verlaufenden Bahnen bzw. Windungen. Die einzelnen Windungen bzw. "Lagen" des flexiblen Körpers sind dabei gegeneinander vollkommen berührungsfrei geführt. Insoweit können keine Reibungs- bzw. Druckkräfte zwischen gegenüberliegenden Gliedern entstehen. Der Körper wird also nicht mit aufeinanderliegenden Windungen auf sich selbst aufgerollt bzw. von sich selbst abgerollt. Dennoch ist die Lösung ähnlich platzsparend. Sie erlaubt zudem auch unrunde bzw. langgestreckte Verläufe für sogenannte Ovalspiralen.

Eine derartige Spiralführung, speziell für Schnelllauftore entwickelt, ist z.B. aus der Patentschrift EP 0 531 320 B1 bekannt. Eine ähnliche Spiralführung für einen Lammellenpanzer wurde in der Patentschrift GB 1 172 560 A beschrieben.

Mit dieser Art berührungsfreier Spiralführung lassen sich erheblich höhere Geschwindigkeiten, insbesondere auch bei langen und/oder schweren Körpern realisieren. Sie vermeidet weitgehend die bekannten Probleme trommelartiger Auf- und Abwickelvorrichtungen. Derartige Spiralführungen werden nicht nur für Lamellenpanzer oder Abdeckschürzen, sondern auch in anderen Gebieten des Maschinenbaus eingesetzt, wenn ein Schnelllauf eines ketten-, strang- oder bandartigen Körpers erforderlich oder wünschenswert ist, die zugleich platzsparend eingefahren werden soll, wie z.B. bei einer Zug-/Schubkette oder allgemein einer Antriebskette.

Bekannt ist es zudem, z.B. aus der DE 20 2015 100484 U1, eine Schnelllauf-Hubvorrichtung für diverse Zwecke mit mindestens einer Versorgungsleitung auszurüsten. So wird z.B. zur Sicherheit bei Schnelllauftoren im Linearabschnitt typisch eine Lichtschranke vorgesehen, welche bei Anwesenheit einer Person oder eines Gegenstands ein Schließen des Tors sperrt. Die Leitungsversorgung des feststehenden Teils der Hubvorrichtung ist grundsätzlich unproblematisch. Aufgrund der komplexen Bewegung einerseits und andererseits dem Fehlen einer herkömmlichen Trommel bzw. des daran drehfesten Innenendes des Körpers, ist es bei Spiralführungen - anders als bei Trommeln - nicht ohne weiteres möglich, den verfahrbaren Körper, insbesondere dessen äußeren Endbereich mit einer Versorgungsleitung auszustatten. Dies kann aber für vielerlei Anwendungen wünschenswert sein, für Energie, Signale, flüssige und/oder gasförmige Betriebsmittel. Beispielhaft sind z.B. ein endseitiger Sensor, wie Endschalter, Aufprallsensor, usw. oder auch für ein endseitiger Verbraucher, z.B. einen Aktor. Eine erste Aufgabe der vorliegenden Erfindung ist es mithin, eine Lösung vorzuschlagen, die das zuverlässige Versorgen des Körpers, insbesondere des den typischen Linearabschnitt durchfahrenden äußeren Endbereichs des Körpers, anhand einer Versorgungsleitung ermöglicht. Dabei soll nach Möglichkeit eine geschützte Anordnung der Versorgungsleitung(en) mit hoher Dauerbeständigkeit vorgesehen werden können.
Zur Lösung dieser Aufgabe ist bei einer gattungsgemäßen Schnelllauf-Hubvorrichtung nach dem Oberbegriff aus Anspruch 1 erfindungsgemäß, vorgesehen, dass der flexible, langgestreckte Körper eine Leitungsführung für die mindestens eine Versorgungsleitung aufweist, wobei diese Leitungsführung einen ersten Teilabschnitt, der im Spiralabschnitt, insbesondere aber nicht zwingend durch die Führung des Körpers selbst, geführt ist und daran anschließend einen ungeführten zweiten Teilabschnitt aufweist, der insbesondere nicht von der Schnelllauf-Führung geführt bzw. mitgeführt ist. Der zweite Teilabschnitt ist bevorzugt freitragend ausgeführt.

Der zweite Teilabschnitt kann an seinem ersten Ende mit dem geführten ersten Teilabschnitt endseitig verbunden sein und mit seinem zweiten Ende endseitig mit einer Drehdurchführung für die mindestens eine Versorgungsleitung verbunden sein. Der ungeführte zweite Teilabschnitt verbindet jedenfalls die Drehdurchführung mit dem geführten ersten Teilabschnitt.

Die vorgeschlagene Anordnung der Leitungsführung stellt unter anderem einen definierten Verlauf bzw. kontrollierten Bewegungsablauf der Versorgungsleitung im Bereich zwischen dem inneren Ende der Führung im Spiralabschnitt und der Drehachse der Drehdurchführung sicher. Dieser Bereich erweist sich gerade bei hohen Geschwindigkeiten als besonders kritisch, da das Innenende des Körpers (ohne Leitungsführung betrachtet) hier eine spiralige Umlaufbewegung mit zu- bzw. abnehmendem Abstand zur Drehachse vollzieht, mit derselben Geschwindigkeit, wie der Vor- bzw. Rückhub des außenliegenden Endes.

Durch den ungeführten zweiten Teilabschnitt lässt sich diese komplexe Bewegung durch die Leitungsführung überbrücken. Der zweite Abschnitt kann dabei insbesondere in Art eines auf- bzw. zugehenden Bogenabschnitts, dessen gedachte Kreisbogen-Sehne bzw. Sekante je nach Hubstellung in der Länge ab- oder zunimmt, angeordnet sein. Die ausgefahrene Endstellung entspricht dann der freitragenden Strecklage des zweiten Teilabschnitts. In eingefahrener Endstellung des Körpers ist der zweite Abschnitt "aufgerollt", insbesondere spiralig, aber ohne in der Spiralführung geführt zu sein. In Kombination mit einer Drehdurchführung wird eine zuverlässige und geschützte Führung der Leitung bereitgestellt.

Auf diese Weise kann die Versorgungsleitung geschützt, insbesondere gegen ein Abknicken geschützt von der Drehdurchführung zum Körper und umgekehrt verlaufen. Zudem erlaubt die Leitungsführung selbst eine Kraftübertragung zwischen dem Innenende und der Drehdurchführung, ohne Belastung der Versorgungsleitung. Die Anordnung erfordert zudem in der Ebene der Führung keinen zusätzlichen Bauraum.

Der Körper ist langgestreckt, vorzugsweise nur in einer Ebene flexibel und soll zug- und schubfest, d.h. in Längsrichtung nicht oder nur geringfügig dehnbar bzw. stauchbar sein. Er kann eine flächige Ausdehnung haben oder strangartig ausgeführt sein.

Kinematisch günstige Verhältnisse bzw. gute Kraftübertragung wird erreicht, wenn der zweite Teilabschnitt einerseits mit kleinem Biegeradius im Drehsinn des spiralartigen Verlaufs betrachtet und, entgegen diesem Drehsinn betrachtet, d.h. im Gegendrehsinn mit einem sehr großem rückwärtigen Biegeradius, insbesondere geradlinig freitragend, gestaltet ist. Für ein kompaktes "Aufrollen" ist es dabei vorteilhaft, wenn der zweite Teilabschnitt einen Biegeradius im Drehsinn aufweist, welcher kleiner oder gleich der innersten Krümmung des Spiralabschnitts, d.h. der Endkrümmung der innersten Spiralwindung, ist. Der vorzugsweise gegen Unendlich tendierende, große rückwärtige Biegeradius erlaubt Schubkraftübertragung auf die Drehdurchführung und vermeidet ein Durch- bzw. Umschlagen entgegen dem Spiraldrehsinn. Der zweite Teilabschnitt soll in die eine Richtung (Drehsinn der Spiral) leicht und hinreichend biegsam sein, in die entgegengesetzte Richtung hingegen nicht oder nur in deutlich geringerem Ausmaß. Auf die Biegeradien des ersten Teilabschnitts und der restlichen Leitungsführung kommt es hingegen wegen der Führung nicht an.

Zum Rest der Führung, insbesondere zu einem typisch vorhandenen linear führenden Abschnitt hin, hat der Spiralabschnitt der Führung an seinem radial äußeren Ende zweckmäßig einen Einlauf bzw. Übergang. Dabei ist vorzugsweise die Länge des zweiten Teilabschnitts der Leitungsführung mindestens so groß und vorzugsweise grösser gewählt, als der in Radialrichtung gemessene Abstand zwischen der Drehachse der Drehdurchführung und der Radialposition des Einlaufs. Auf die Länge des ersten Teilabschnitts kommt es grundsätzlich nicht an. Sie kann nur einem Anteil der Gesamtlänge des langgestreckten Körpers entsprechen, sollte jedoch mindestens der Länge des Spiralabschnitts entsprechen. Die Leitungsführung kann sich über die Gesamtlänge des Körpers erstrecken, z.B. falls das äußere Ende zu versorgen ist, und hierzu ggf. einen weiteren dritten Funktionsabschnitt umfassen.

Im Rahmen der Erfindung kann der Körper, insbesondere eine anwendungsspezifische Gliederkette, z.B. eine Zug-/Schubkette, so modifiziert werden, dass diese die Leitungsführung bildet und hierzu einen Leitungskanal für die mindestens eine Versorgungsleitung aufweist.

Alternativ kann die Leitungsführung separat, insbesondere als Energieführungskette, ausgeführt sein. Diese verläuft dann vorzugsweise zumindest über die Länge ihrer beiden Teilabschnitte parallel zum Körper und kann z.B. - mit Ausnahme des ungeführten zweiten Abschnitts - auch an dieser mitgeführt sein bzw. insgesamt ohne eines separate, eigens zugeordnete Führung geführt sein.

Ebenfalls im Rahmen der Erfindung liegt die anwendungsspezifische Anpassung einer Energieführungskette an die gewünschte Verwendung des Körpers, z.B. als Zug-/Schubkette.

Eine Energieführungskette bekannter Bauart hat eine Vielzahl von gegeneinander schwenkbaren Kettengliedern, die paarweise durch eine Gelenkverbindung miteinander verbunden sind und einen Leitungskanal zur geschützten Führung der mindestens einen Versorgungsleitung, z.B. eines elektrischen Kabeln oder eines Hydraulik- oder Pneumatik-Schlauchs. Die Kettenglieder können insbesondere aus Kunststoff hergestellt sein.

Aufgrund ihrer Bauweise eignet sich eine Energieführungskette überraschend gut für die Zusammenwirkung mit Spiralführungen bzw. zur Anordnung im Spiralabschnitt, da sie ohne Weiteres in Windungen, die gegeneinander berührungsfrei sind verlaufen kann bzw. einer spiralförmig nach innen verlaufenden Bahn folgt.

Dementsprechend betrifft die Erfindung nach einem weiteren, unabhängigen Aspekt auch eine Vorrichtung mit einer Energieführungskette für eine Versorgungsleitung sowie einer Schnelllauf-Führung, typischerweise mit einem Linearabschnitt herkömmlicher Bauart, sowie einem Spiralabschnitt als kompaktem Speicher, in welchem zumindest ein Teil der Kette platzsparend aufgenommen wird. Im Spiralabschnitt verfährt die Energieführungskette in mehreren gegeneinander berührungsfrei beabstandeten im Wesentlichen spiralförmig nach innen verlaufenden Bahnen bzw. Windungen. Ferner ist eine Drehdurchführung für die Versorgungsleitung vorgesehen. Auch in der Ausführungsform in welcher die Energieführungskette den Körper bildet bzw. umgekehrt, hat diese Kette einen ersten Teilabschnitt, der im Spiralabschnitt geführt ist und einen ungeführten, vorzugsweise freitragenden zweiten Teilabschnitt. Der zweite Teilabschnitt verbindet den ersten Teilabschnitt mit der Drehdurchführung, und kann insbesondere mit seinem ersten Ende mit dem geführten ersten Teilabschnitt endseitig verbunden sein, und mit seinem zweiten Ende mit einer Drehdurchführung für die mindestens eine Versorgungsleitung verbunden sein.

In einer Ausführungsform dient der ungeführte Teilabschnitt zugleich zur Kraftübertragung auf die Drehdurchführung, wobei diese eine feststehende Anschlussseite und einen drehbare Anschlussseite aufweist. Zur Kraftübertragung ist der zweite Teilabschnitt bevorzugt unmittelbar mechanisch mit der drehbaren Anschlussseite im Eingriff, dergestalt, dass die drehbare Anschlussseite entsprechend dem Ein- und Ausfahren des Körpers mit gedreht wird. In einer derartigen Ausführungsform kann das zweite Ende des ungeführten zweiten Teilabschnitts drehfest, insbesondere kraftübertragend mit der drehbaren Anschlussseite verbunden sein. Hierbei wirkt der zweite Teilabschnitt, insbesondere bei gestreckter aber zumindest freitragender Anordnung, in Art eines Pleuels bzw. einer Schubstange, welche die drehbare Anschlussseite der Drehdurchführung antreibt.

Als Drehdurchführung kommt eine herkömmliche Drehkupplung für Gas oder Flüssigkeit, oder eine Schleifring-Anordnung für elektrische Leistung oder Signale in Betracht.

Die mindestens eine Versorgungsleitung, wie z.B. ein Kabel, Schlauch oder dgl. kann von der feststehenden Anschlussseite über die drehbare Anschlussseite bis zur Leitungsführung bzw.

Energieführungskette unterbrechungsfrei durchgehen.

Dies wird ermöglicht, wenn die Drehdurchführung einen wendelförmigen Verlauf aufweist mit einer oder mehreren ersten Wendellagen, in welchen die Versorgungsleitung um eine Drehachse gewunden ist, einer oder mehreren zweiten Wendellagen, in welchen die Versorgungsleitung im Gegensinn um die Drehachse gewunden ist, und einem Umlenkbogen der beide Wendellagen verbindet. Im Umlenkbogen ist die mindestens eine Versorgungsleitung dabei umgeschlagen. Der Vorteil gegenüber herkömmlichen Drehdurchführungen, wie z.B. elektrischen Schleifkontakten oder hydraulischen Drehkupplungen, liegt einerseits darin, dass leckage- bzw. verlustbehaftete Unterbrechungen gänzlich vermieden und andererseits darin, dass auch eine Mehrzahl Leitungen für verschiedene Medien bzw. Signal- und Stromversorgungen ohne weiteres vom Festpunkt auf einen drehenden Punkt geführt werden können.

Eine geeignete Drehdurchführung dieser Art wurde durch die Anmelderin in der Patentschrift WO 2011/086198 A2 vorgeschlagen, auf deren Inhalt betreffend den Aufbau der Drehdurchführung vollumfänglich Bezug genommen wird. Der begrenzte Drehwinkel derartiger Drehdurchführungen kann dabei leicht durch eine hinreichende Anzahl Wendellagen, an den benötigten Gesamthub angepasst werden.

Insbesondere bei Verwendung der letztgenannten Gestaltung der Drehdurchführung ist die mechanisch mit dem Körper verbundene drehbare Anschlussseite der Drehdurchführung bevorzugt ausschließlich durch den zweiten Teilabschnitt der Kette angetrieben. Sie kann jedoch auch mit einer Rückstellfeder ausgerüstet sein, welche bei Vorwärtsdrehung entsprechend dem Vorhub des Körpers bzw. der Kette gespannt wird, und beim Rückhub die Anschlussseite unterstützend rückwärts dreht. So wirkt im voll ausgefahrenen Zustand eine Spannung der Rückstellfeder, welche ein Aufrollen des zweiten Teilabschnitts der Leitungsführung bzw. Energieführungskette um die drehbare Anschlussseite der Drehdurchführung unterstützt. Die Rückstellfeder kann im voll eingefahrenen Zustand vorgespannt sein. Es wird in beiden Fällen - mit oder ohne Feder - kein motorischer Antrieb der Drehdurchführung benötigt.

Ein einfache Bauweise der Schnelllauf-Führung umfasst zwei parallel gegenüberliegend angeordnete Führungsprofile, insbesondere mit im wesentlichem U-förmigem Profilquerschnitt, z.B. Führungsschienen. Der Verlauf der Profile gibt den Spiralabschnitt und ggf. einen oder mehrere Linearabschnitte vor. Insbesondere passend zu einem derartigen Profilquerschnitt kann der erste Teilabschnitt beidseitig seitlich vorstehende Führungszapfen aufweisen, welche längsverschieblich gleitend in den Profilen geführt sind, und der zweite Teilabschnitt frei von derartigen Führungszapfen ist. Die Führungszapfen können z.B. durch Überlänge der Verbindungsbolzen in der Gelenkverbindung ausgewählter Kettenglieder bereitgestellt werden, die inhärent auf der günstigen Höhe der neutralen Faser liegen, oder aber anderweitig an den Gliedern angeordnet bzw. angeformt sein, insbesondere auf Höhe der neutralen Faser. Führungszapfen oder dgl. sind bevorzugt in regelmäßigem Abstand vorgesehen, ggf. an jedem n-ten Kettenglied, wobei n»2 gelten kann. Anstelle einer Gleitlagerung mit Zapfen können Rollen an der Kette bzw. am Körper vorgesehen werden, die in den Profilen abrollen. Dies ist insbesondere bei hohen Geschwindigkeiten vorteilhaft, da die Reibung reduziert wird.

In besonders vereinfachter Bauweise, wird der erste Teilabschnitt von der Führung des Körpers mitgeführt und der freitragende zweite Teilabschnitt ist hingegen nicht von der Führung geführt. Der geführte erste Teilabschnitt muss nicht zwingend von der Führung, insbesondere von deren Spiralabschnitt mitgeführt sein. Der Leitungsführung bzw. Energieführungskette kann z.B. parallel eine passend dimensionierte zusätzliche Führung zugeordnet sein.

Der Spiralabschnitt kann allgemein spiralförmig, mit zumindest abschnittsweise nach innen zulaufenden Bereichen sprunghaft oder stetig steigender Krümmung gestaltet sein. Er kann z.B. mit stetig gebogener Spiralform in Art einer Rundspirale ausgeführt sein oder in Art einer Ovalspirale, insbesondere mit zwischenliegenden geraden oder weniger stark gekrümmten Abschnitten welche die Spiralbögen verbinden. Eine Ovalspirale erlaubt es, bei Vergrößerung der Baugröße in einer Raumrichtung, eine besonders kompakte und platzsparende Baugröße in eine andere, insbesondere senkrechte Raumrichtung zu erzielen, z.B. mit einer nur dreifache Überdeckung, d.h. mit ggf. nur eineinhalb Umrundungen.

Krümmungsbegrenzungen lassen sich bei Energieführungsketten besonders leicht umsetzen. Dies kann z.B. einerseits erzielt werden indem die Kettenglieder der Energieführungskette zumindest im zweiten Teilabschnitt an jeder Gelenkverbindung einen Schwenkwinkelanschlag aufweisen, der so gewählt ist dass der zweite Teilabschnitt einen Biegeradius im Drehsinn der Spirale aufweist, welcher kleiner oder gleich der innersten Krümmung des Spiralabschnitts. Andererseits kann die Kette im zweiten Teilabschnitt an jeder Gelenkverbindung einen Streckwinkelanschlag aufweisen, der so gewählt ist dass der zweite Teilabschnitt entgegen dem Drehsinn der Spirale gestreckt verläuft. Durch eine möglichst minimale rückwärtige Biegung im zweiten Teilabschnitt kann dieser Schubkraft übertragen und es wird ein Umschlagen entgegen dem gewünschten Spiraldrehsinn vermieden.

In bevorzugter Ausführungsform entspricht auch bei einem Körper in Form einer Energieführungskette die Länge des zweiten Teilabschnitts mindestens dem Radialabstand zwischen der Drehachse und der Radialposition des Einlaufs in den Spiralabschnitt. Diese Länge kann um mindestens den halben Umfang der drehbaren Anschlussseite der Drehdurchführung erhöht werden, sodass die Energieführungskette auch im voll ausgefahrenen Zustand mit dem zweiten Teilabschnitt noch mindestens über einen halben Umfang die Drehdurchführung umschlingt. Dadurch kann die Kraftübertragung auf die Drehdurchführung in Zugrichtung beim Vorhub bis zur Endstellung überwiegend durch Reibschluss erfolgen. So wird die Zugbeanspruchung am zweiten Ende, das endseitig mit drehfest mit der Drehdurchführung verbunden ist, minimiert.

In bevorzugter Ausführungsform steht ein Antrieb, insbesondere ein Elektromotor, abtriebsseitig in mechanischer Wirkverbindung mit dem Körper um diesen wahlweise zum Vor- und Rückhub anzutreiben. Dabei kann die drehbare Anschlussseite der Drehdurchführung über die Leitungsführung bzw. Energieführungskette antreibbar sein, d.h. die drehbare Anschlussseite der Drehdurchführung benötigt keinen eigenen Antrieb. Denkbar wäre auch eine regelungstechnisch aufwendigere Anordnung mit zwei synchronisiert laufenden Antrieben um übermäßige Zug-/Schubspannung zu vermeiden, z.B. bei sehr großen Längen oder schwerer Leitungsbeladung. Ein Antrieb unmittelbar am Körper ist für den gewünschten Schnelllauf günstig, und sollte am Linearabschnitt angreifen.

Die erfindungsgemäße Vorrichtung kann zur Realisierung eines Schnelllaufs in unterschiedlichen Bereichen eingesetzt werden, z.B. für eine Antriebskette zur Schub- und/oder Zugkraftübertragung in einer Maschine, für eine Gliederschürze einer Maschinenabdeckung oder für den Lamellenpanzer eines Schnelllauf-Hubtors.

Durch Ausrüsten des flexiblen Körpers, ggf. in an sich bekannter Gestalt wie z.B. einem Schnelllauf-Hubtor, mit einer Versorgungsleitung, die durch die erfindungsgemäße Leitungsführung bzw. Energieführungskette geschützt geführt wird, eröffnen sich unterschiedlichste neue Gestaltungsmöglichkeiten am freien äußeren Ende, z.B. betreffend Sensoren und/oder Aktoren.

Durch kompakte Speicherung bzw. Aufbewahrung erlaubt die vorgeschlagene Bauweise zudem die koaxiale oder achsparallele Anordnung mehrerer Körper mit Versorgungsleitung auf engem Bauraum. So liegt z.B. auch eine Doppel-Schnelllauf-Hubvorrichtung mit zwei achsparallel angeordneten Spiralabschnitten im Rahmen der Erfindung.

Weitere Merkmale der Erfindung ergeben sich aus den beigefügten Figuren, anhand derer ein Ausführungsbeispiel der Erfindung nachfolgend ohne Beschränkung der Allgemeinheit der vorstehenden Beschreibung erläutert wird. In den Figuren bezeichnen gleiche Bezugszeichen baugleiche oder funktionsgleiche Elemente. Hierin zeigen:
FIG.1A-1B: Vertikalschnitte durch eine Schnelllauf-Hubvorrichtung mit einer Gliederkette, dargestellt in voll eingefahrenem Zustand (FIG.1A) und in voll ausgefahrenem Zustand (FIG.1B);
FIG.2A-2B: die als Leitungsführung ausgeführte Gliederkette der Hubvorrichtung in perspektivischer Ansicht, in voll eingefahrenem (FIG.2A) und voll ausgefahrenem Zustand (FIG.2B);
FIG.3: eine Frontansicht der Schnelllauf-Hubvorrichtung mit einer Drehdurchführung (und Darstellung der Schnittebene I-I zu FIG.1B);
FIG.4: das äußere Ende der Gliederkette mit dem Kanal zur Leitungsführung in vergrößerter perspektivischer Ansicht; und
FIG.5: ein vergrößerter Bereich aus der Frontansicht in FIG.3. in welchem die Kette aus der Führung tritt.

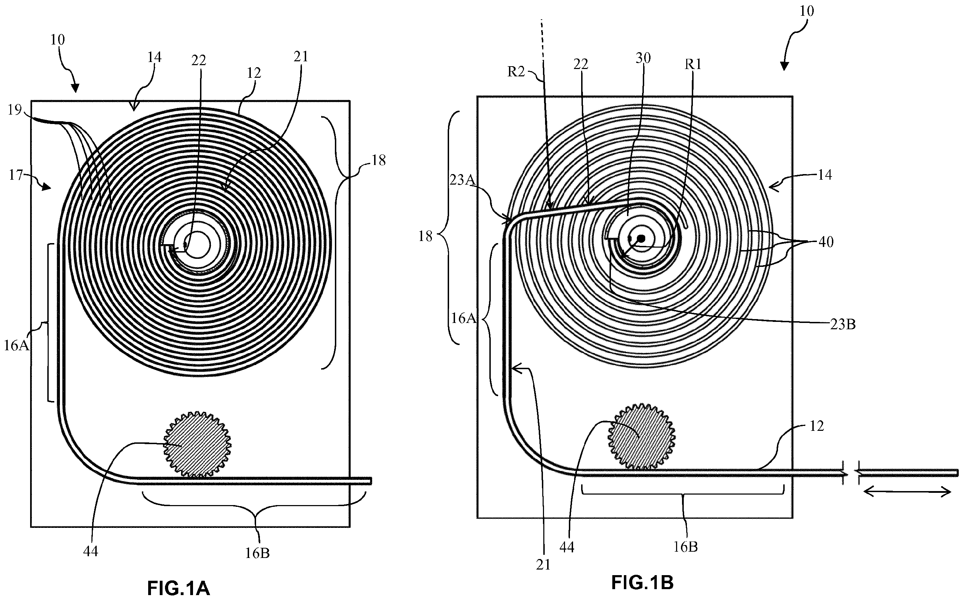

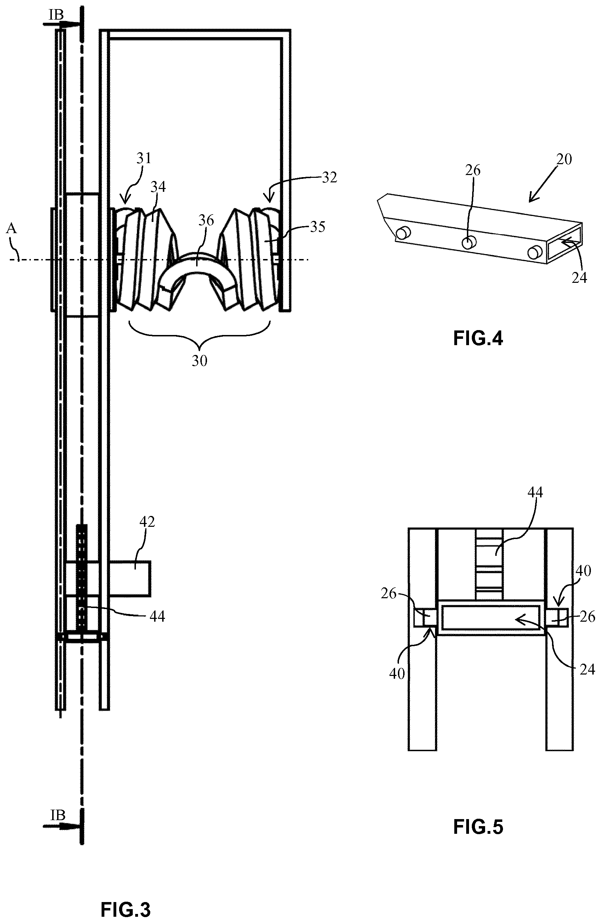

In FIG.1-5 ist eine beispielhafte Schnelllauf-Führung allgemein mit 10 bezeichnet. Die Schnelllauf-Führung 10 umfasst einen langgestreckten, flexiblen Körper, hier ein Antriebskette 12, zur Schub- und/oder Zugkraftübertragung in einer nicht näher gezeigten Maschine, die in einer Führung 14 geführt ist. Die Führung 14 hat zwei über einen Bogen verbundene Linearabschnitte 16A, 16A in denen die Antriebskette 12 geradlinig geführt ist. Ein Spiralabschnitt 18 mit einem spiralförmigen Verlauf der einer archimedischen Spirale entspricht, d.h. bei dem der Windungsabstand (Abstand zwischen den Windungen 19 in Radialrichtung gemessen) konstant ist, erlaubt ein kompaktes Aufrollen der Antriebskette 12. Die hier gezeigte Schnelllauf-Führung 10 hat Führungsprofile 40 in zwei parallel gegenüberliegenden Platten (vgl. FIG.3) die den gewünschten Verlauf der Linearabschnitte 16A, 16A und des Spiralabschnitts 18 vorgeben. Alternativ können z.B. Führungsschienen oder ähnliche kulissenartige Führungen mit dem gewünschten Kurvenverlauf verwendet werden. Die Führungsprofile 40 sind z.B. als gefräste Nuten mit näherungsweise U-förmigem Profilquerschnitt (FIG.5) ausgeführt. In die Führungsprofile 40 bzw. Führungsnuten greifen Führungszapfen 26 gleitend und kurvi-linear in Längsrichtung der Antriebskette 12 verschieblich ein, die seitlich gegenüberliegend von der Antriebskette 12 vorstehen. Die Führungszapfen 26 sind in regelmäßigen Abständen, z.B. an jedem n-ten Kettenglied der Antriebskette 12 angebracht, und können z.B. durch verlängerte Lagerzapfen der Gelenkverbindung realisiert sein.

Im Spiralabschnitt 18 wird der überwiegende Teil beim Einfahren der Kette 12 platzsparend aufgenommen (FIG.1A). Wie am besten aus FIG.1A ersichtlich, ist die Antriebskette 12 dabei im Spiralabschnitt 18 so aufgenommen, dass mehrere gegeneinander Windungen 19 im Wesentlichen spiralförmig nach innen und gegeneinander berührungsfrei, d.h. mit Freiraum dazwischen, verlaufen. Alternativ zur hier gezeigten archimedischen Rundspirale ist auch eine Ovalspirale denkbar z.B. wenn die Bauhöhe reduziert werden soll.

In FIG.1-5 dient die Kette 12 selbst als eine Leitungsführung 20 für Versorgungsleitungen (nicht gezeigt) und hat hierzu einen inneren Leitungskanal 24 der durch Seitenteile abgegrenzt ist. Die Leitungsführung 20 ist somit in Art einer Energieführungskette ausgeführt. Die Leitungsführung 20 kann z.B. eine Vielzahl gegeneinander schwenkbarer Kettenglieder (nicht gezeigt) aufweist, die paarweise durch eine Gelenkverbindung miteinander verbunden sind und den Leitungskanal 24 zum geschützten Führen der Versorgungsleitungen bilden.

Die Leitungsführung 20 hat einen ersten Teilabschnitt 21, der beim Einfahren im Spiralabschnitt 18 geführt ist und einen stets ungeführten zweiten Teilabschnitt 22 umfasst, der nicht mit den Führungsprofilen 40 der Führung 14 in Eingriff steht, wie aus FIG.1B ersichtlich.

Der zweite Teilabschnitt 22 ist mit seinem ersten Ende 23A endseitig mit dem ersten Teilabschnitt 21 verbunden. Sein zweites Ende 23B ist endseitig mit einer Drehdurchführung 30 (FIG.3) für mehrere Versorgungsleitungen verbunden. Ein in der Hauptebene freier Verlauf des ungeführten zweiten Teilabschnitts 22 kann einfach dadurch erzielt werden, dass der zweite Teilabschnitts 22
- im Gegensatz zum ersten Teilabschnitt 21 der Leitungsführung 20
- keine Führungszapfen 26 hat, die in die Führungsprofile 40 eingreifen. Der zweite Teilabschnitt 22 einen kleinen Biegeradius R1 im Drehsinn des spiralartigen Verlaufs, der kleiner oder gleich der innersten Krümmung des Spiralabschnitts 18 gewählt ist.

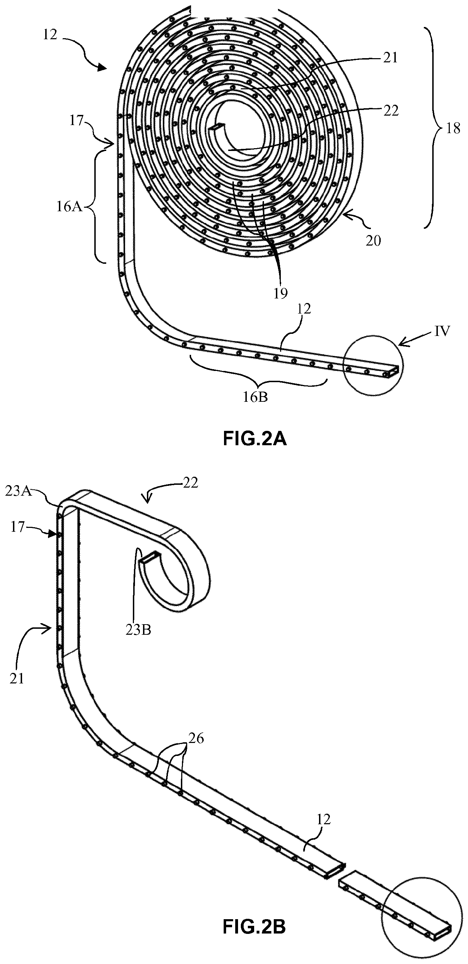

Im Gegendrehsinn hat der zweite Teilabschnitt 22 einen sehr groß, vorzugsweise gegen Unendlich gewählten rückwärtigen Biegeradius R2, sodass er bei voll ausgefahrener Kette 12 (FIG.1B / FIG.2B) im Wesentlichen gestreckt freitragend verläuft, d.h. nicht im Gegendrehsinn durchbiegt. Die Radien R1, R2 können bei einem Aufbau der Leitungsführung 20 nach dem Prinzip einer Energieführungskette einfach durch geeignete Wahl bzw. Dimensionierung des Schwenkwinkelanschlag und des rückwärtigen Streckwinkelanschlags eingestellt werden.

Eine bevorzuge Gestaltung der Drehdurchführung 30 ist in FIG.3 näher gezeigt. Sie hat eine feststehende Anschlussseite 31, eine drehbare Welle, welche die Drehachse A definiert und einen drehbare Anschlussseite 32 aufweist. Das zweite Ende 23B des ungeführten zweiten Teilabschnitts 22 ist kraftübertragend und drehfest mit der drehbaren Anschlussseite 32 verbunden. Die Drehdurchführung 30 bildet einen wendelförmigen Verlauf mit zwei ersten Wendellagen 34, in welchen die Versorgungsleitungen um die Drehachse A gewunden sind, und gegenläufigen zweiten Wendellagen 35, in welchen die Versorgungsleitungen im umgekehrten Drehsinn um die Drehachse A gewunden sind. Die Wendellagen 34, 35 sind durch einen axialvariablen Umlenkbogen 36 verbunden, in welchem die Leitungen ihren Drehsinn umkehren. Die Wendellagen 34, 35 verändern ihre Aufteilung in der Anzahl je nach Drehstellung der Drehdurchführung 30 wobei sich der Umlenkbogen 36 axial verlagert. Zur Vermeidung von Wiederholung wird der entsprechende Inhalt betreffend den Aufbau aus der Patentschrift WO 2011/086198 A2 vollumfänglich einbezogen. Bleibt noch anzumerken, dass die drehbare Anschlussseite 32 vorzugsweise ausschließlich durch den ungeführten zweiten Teilabschnitt 22 der Antriebskette 12 betätigt wird. Beim Rückhub rollt der ungeführte zweiten Teilabschnitt 22 auf einer Hohlwelle auf, die an der Welle der Drehdurchführung 30 koaxial zur Achse A angebracht ist (FIG.3).

Die Länge des zweiten Teilabschnitts 22 (gemessen in Längsrichtung der Kette) beträgt im hier gezeigten Beispiel dem radialen Abstand zwischen der Drehachse A der Drehdurchführung 30 und der radialen Position des Einlaufs 17 erhöht um ca. 3/4 des Umfangs der Hohlwelle an der drehbaren Anschlussseite 31 der Drehdurchführung 30. So umschlingt der zweite Teilabschnitt 22 im voll ausgefahrenen Zustand (FIG.1B/2B) noch etwa 270° Umfang an der drehbaren Anschlussseite 31 der Drehdurchführung 30 (FIG.2B) sodass die Kraftübertragung beim Vorhub überwiegend durch Reibschluss erfolgt.

FIG.3 zeigt am besten einen Antrieb 42, z.B. einen Elektromotor, der abtriebsseitig ein Zahnrad-Ritzel 44 aufweist, das mechanisch im Eingriff unmittelbar mit der Antriebskette 12 steht und diese für den Vor- und Rückhub (vgl. Doppelpfeil in FIG.1B) antreibt.
Die Drehachse ist achsparallel zur Drehachse A der Drehdurchführung 30 bzw. zur gedachten Zentralachse des Spiralabschnitts 18.

Im gezeigten Beispiel nach FIG.1-5 kann die Antriebskette 12 zur Schub- und/oder Zugkraftübertragung in einer Maschine dienen. Es sind jedoch auch andere Anwendungen der Schnelllauf-Hubvorrichtung mit Versorgungsleitung möglich, z.B. bei Hubtoren, Gliederschürzen, usw.

### Bezugszeichenliste

10 Schnelllauf-Führung
12 Antriebskette
14 Führung
16A, 16B Linearabschnitt
17 Einlauf
18 Spiralabschnitt
19 Windung (bzw. Bahn)
20 Leitungsführung/Energieführungskette
21 erster Teilabschnitt
22 zweiter Teilabschnitt
23A, 23B Enden (zweiter Teilabschnitt)
24 Leitungskanal
26 Führungszapfen
30 Drehdurchführung
31 drehbare Anschlussseite
32 feststehende Anschlussseite
34, 35 Wendellagen
36 Umlenkbogen
40 Führungsprofile
42 Antrieb
44 Ritzel
A Drehachse
R1, R2 Biegeradius

## Patentansprüche

1. Schnelllauf-Hubvorrichtung für einen langgestreckten, flexiblen Körper (12), mit mindestens einer Versorgungsleitung und umfassend
eine Führung (10), zum geführten Verfahren des Körpers, mit einem Spiralabschnitt (18), in welchem zumindest ein Teil des Körpers platzsparend aufnehmbar ist in mehreren gegeneinander berührungsfrei beabstandeten im Wesentlichen spiralförmig nach innen verlaufenden Bahnen, wobei die Führung zwei parallel gegenüberliegend angeordnete Führungsprofile (40) aufweist, deren Verlauf den Spiralabschnitt (18) und einen daran anschließenden Linearabschnitt (16A; 16B) vorgibt; wobei
der Körper (12) eine Leitungsführung (20) für die mindestens eine Versorgungsleitung aufweist, wobei die Leitungsführung
- einen ersten Teilabschnitt (21) umfasst, der im Spiralabschnitt geführt ist und beidseitig seitlich vorstehende Zapfen (26), Rollen oder dergleichen aufweist, welche gleitend oder rollend in den Führungsprofilen (40) geführt sind; und
- einen ungeführten zweiten Teilabschnitt (22) umfasst, mit einem ersten Ende (23A), das endseitig mit dem ersten Teilabschnitt verbunden ist, und einem zweiten Ende (23B), das endseitig mit einer Drehdurchführung (30) für die mindestens eine Versorgungsleitung verbunden ist.

2. Schnelllauf-Hubvorrichtung nach Anspruch 1, **dadurch gekennzeichnet, dass** der zweite Teilabschnitt (21) einen kleinen Biegeradius (R1) im Drehsinn des spiralartigen Verlaufs hat und im Gegendrehsinn mit großem rückwärtigem Biegeradius (R2) gestaltet ist, vorzugsweise freitragend.

3. Schnelllauf-Hubvorrichtung nach Anspruch 1 oder 2, **dadurch gekennzeichnet, dass** der Spiralabschnitt einen Einlauf (17) aufweist und die Länge des zweiten Teilabschnitts (22) mindestens dem Abstand zwischen der Drehachse (A) der Drehdurchführung (30) und dem Einlauf (17) entspricht.

4. Schnelllauf-Hubvorrichtung nach Anspruch 2 oder 3, **dadurch gekennzeichnet, dass** der zweite Teilabschnitt (22) einen Biegeradius (R1) im Drehsinn aufweist, welcher kleiner oder gleich der innersten Krümmung des Spiralabschnitts ist.

5. Schnelllauf-Hubvorrichtung nach einem der Ansprüche 1 bis 4, **dadurch gekennzeichnet, dass** der flexible Körper (12) die Leitungsführung (20) bildet und einen Leitungskanal (24) für die mindestens eine Versorgungsleitung aufweist.

6. Schnelllauf-Hubvorrichtung nach einem der Ansprüche 1 bis 4, **dadurch gekennzeichnet, dass** die Leitungsführung separat, insbesondere als Energieführungskette (20), ausgeführt und am flexiblen Körper vorgesehen ist.

7. Vorrichtung mit einer Energieführungskette (20) für mindestens eine Versorgungsleitung und einer Schnelllauf-Führung (10) umfassend einen Spiralabschnitt (18) in welchem zumindest ein Teil der Energieführungskette (20) platzsparend aufnehmbar ist in mehreren gegeneinander berührungsfrei beabstandeten im Wesentlichen spiralförmig nach innen verlaufenden Bahnen verläuft, wobei die Führung zwei parallel gegenüberliegend angeordnete Führungsprofile (40) aufweist, deren Verlauf den Spiralabschnitt (18) und einen daran anschließenden Linearabschnitt (16A; 16B) vorgibt; wobei die Energieführungskette (20) insbesondere eine Vielzahl gegeneinander schwenkbarer Kettenglieder aufweist, die paarweise durch eine Gelenkverbindung miteinander verbunden sind und einen Leitungskanal (24) zum geschützten Führen der mindestens einen Versorgungsleitung bilden; und wobei die Energieführungskette ferner
- einen ersten Teilabschnitt (21) umfasst, der im Spiralabschnitt (18) geführt ist und beidseitig seitlich vorstehend jeweils eine Anzahl Führungselemente (26) aufweist, welche gleitend oder rollend in den Führungsprofilen (40) geführt sind; und
- einen ungeführten zweiten Teilabschnitt (22) umfasst, mit einem ersten Ende (23A), das mit dem ersten Teilabschnitt verbunden ist, und einem zweiten Ende (23B), das mit einer Drehdurchführung (30) für die mindestens eine Versorgungsleitung verbunden ist.

8. Vorrichtung nach einem der Ansprüche 1 bis 7, **dadurch gekennzeichnet, dass** die Drehdurchführung (30) eine feststehende Anschlussseite (31) und einen drehbare Anschlussseite (32) aufweist, und dass das zweite Ende drehfest mit der drehbaren Anschlussseite verbunden ist.

9. Vorrichtung nach einem der Ansprüche 1 bis 8, weiterhin umfassend mindestens eine Versorgungsleitung, wie ein Kabel, ein Schlauch oder dgl., **dadurch gekennzeichnet, dass** die Drehdurchführung (30) einen wendelförmigen Verlauf aufweist mit einer oder mehreren ersten Wendellagen (34), in welchen die Versorgungsleitung um eine Drehachse (A) gewunden ist, mit einer oder mehreren zweiten Wendellagen (35), in welchen die Versorgungsleitung im Gegensinn um die Drehachse (A) gewunden ist, und mit einem Umlenkbogen (36) der beide Wendellagen verbindet und in welchem die Versorgungsleitung umgeschlagen ist.

10. Vorrichtung nach einem der Ansprüche 1 bis 8, **dadurch gekennzeichnet, dass** die Drehdurchführung als Drehkupplung für Gas oder Flüssigkeit, oder als Schleifring-Anordnung für elektrische Leistung oder Signale ausgeführt ist.

11. Vorrichtung nach einem der Ansprüche 1 bis 10, **dadurch gekennzeichnet, dass** die Führungsprofile (40) einen im Wesentlichen U-förmigen Profilquerschnitt aufweisen.

12. Vorrichtung nach einem der Ansprüche 1 bis 11, **dadurch gekennzeichnet, dass** der erste Teilabschnitt (21) von der Führung (14) mitgeführt ist und der zweite Teilabschnitt (22) nicht von der Führung (14) geführt ist.

13. Vorrichtung nach einem der Ansprüche 1 bis 12, **dadurch gekennzeichnet, dass** der Spiralabschnitt (18) mit stetig gebogener Spiralform in Art einer Rundspirale gestaltet ist.

14. Vorrichtung nach einem der Ansprüche 1 bis 12, **dadurch gekennzeichnet, dass** der Spiralabschnitt langgestreckt in Art einer Ovalspirale gestaltet ist, insbesondere mit geraden Abschnitten, welche die Spiralbögen verbinden.

15. Vorrichtung nach Anspruch 7, **dadurch gekennzeichnet, dass** die Kettenglieder der Energieführungskette zumindest im zweiten Teilabschnitt an jeder Gelenkverbindung einerseits einen Schwenkwinkelanschlag aufweisen, sodass der zweite Teilabschnitt einen Biegeradius im Drehsinn der Spirale aufweist, welcher kleiner oder gleich der innersten Krümmung des Spiralabschnitts ist, und andererseits einen Streckwinkelanschlag aufweisen, sodass der zweite Teilabschnitt im Gegendrehsinn gestreckt verläuft.

16. Vorrichtung nach Anspruch 7 oder 8, **dadurch gekennzeichnet, dass** der Spiralabschnitt einen Einlauf aufweist und die Länge des zweiten Teilabschnitts mindestens dem Abstand zwischen der Drehachse der Drehdurchführung und dem Einlauf entspricht.

17. Vorrichtung nach einem der Ansprüche 1 bis 16, **dadurch gekennzeichnet, dass** ein Antrieb, insbesondere ein Elektromotor, in Wirkverbindung mit dem flexiblen Körper (12) steht.

18. Vorrichtung nach einem der Ansprüche 1 bis 17, **dadurch gekennzeichnet, dass** der flexible Körper (12) als
- Antriebskette oder Strang zur Schub- und/oder Zugkraftübertragung in einer Maschine;
- Gliederschürze für eine Maschinenabdeckung; oder
- Lamellenpanzer eines Schnelllauf-Hubtors verwendet wird.

## Claims

1. A high-speed lifting device for an elongate, flexible body (12), having at least one supply line and comprising a guideway (10) for guided displacement of the body, having a spiral portion (18), in which at least part of the body is compactly accommodatable in a plurality of spaced tracks which are not in mutual contact and extend spirally inwards, wherein the guideway has two guide profiles (40) arranged parallel opposite one another, the course of which profiles defines the spiral portion (18) and a linear portion (16A; 16B) subsequent thereto, wherein
the body (12) has a line guideway (20) for the at least one supply line, wherein the line guideway
- comprises a first sub-portion (21) which is guided in the spiral portion and has journals (26), rollers or the like projecting laterally at both sides which are slidingly or rollingly guided in the guide profiles (40), and
- comprises an unguided second sub-portion (22) having a first end (23A) which is connected at the end to the first sub-portion and a second end (23B) which is connected at the end to a rotary feedthrough (30) for the at least one supply line.

2. The high-speed lifting device as claimed in claim 1, **characterized in that** the second sub-portion (21) has a small bending radius (R1) in the direction of rotation of the spiral course and in the opposite direction of rotation is configured with a large, preferably self-supporting, backwards bending radius (R2).

3. The high-speed lifting device as claimed in claim 1 or 2, **characterized in that** the spiral portion has an inlet (17) and the length of the second sub-portion (22) at least corresponds to the distance between the axis of rotation (A) of the rotary feedthrough (30) and the inlet (17) .

4. The high-speed lifting device as claimed in claim 2 or 3, **characterized in that** the second sub-portion (22) has a bending radius (R1) in the direction of rotation which is less than or equal to the innermost curvature of the spiral portion.

5. The high-speed lifting device as claimed in one of claims 1 to 4, **characterized in that** the flexible body (12) forms the line guideway (20) and has a line duct (24) for the at least one supply line.

6. The high-speed lifting device as claimed in one of claims 1 to 4, **characterized in that** the line guideway is of separate construction, in particular in the form of an energy chain (20) and is provided on the flexible body.

7. A device having an energy chain (20) for at least one supply line and a high-speed guideway (10) comprising a spiral portion (18) in which at least part of the energy chain (20) is compactly accommodatable in a plurality of spaced tracks which are not in mutual contact and extend substantially spirally inwards, wherein the guideway has two guide profiles (40) arranged parallel opposite one another, the course of which profiles defines the spiral portion (18) and a linear portion (16A; 16B) subsequent thereto; wherein the energy chain (20) in particular has a plurality of chain links which are swivelable relative to one another, are connected together in pairs by an articulated joint and form a line duct (24) for protected guidance of the at least one supply line and wherein the energy chain furthermore
- comprises a first sub-portion (21) which is guided in the spiral portion (18) and in each case has a number of guide elements (26) projecting laterally at both sides which are slidingly or rollingly guided in the guide profiles (40), and
- comprises an unguided second sub-portion (22) having a first end (23A) which is connected to the first sub-portion and a second end (23B) which is connected to a rotary feedthrough (30) for the at least one supply line.

8. The device as claimed in one of claims 1 to 7, **characterized in that** the rotary feedthrough (30) has a stationary connection side (31) and a rotatable connection side (32) and **in that** the second end is non-rotatably connected to the rotatable connection side.

9. The device as claimed in one of claims 1 to 8, furthermore comprising at least one supply line, such as a cable, hose or the like, **characterized in that** the rotary feedthrough (30) has a helical course with one or more first helical turns (34), in which the supply line is wound around an axis of rotation (A), with one or more second helical turns (35), in which the supply line is wound in the opposite direction around the axis of rotation (A), and with a deflection arc (36) which connects the two helical turns and in which the supply line is reversed.

10. The device as claimed in one of claims 1 to 8, **characterized in that** the rotary feedthrough takes the form of a rotary joint for gas or liquid, or a slipring arrangement for electrical power or signals.

11. The device as claimed in one of claims 1 to 10, **characterized in that** the guide profiles (40) have a substantially U-shaped profile cross-section.

12. The device as claimed in one of claims 1 to 11, **characterized in that** the first sub-portion (21) is carried by the guideway (14) and the second sub-portion (22) is not guided by the guideway (14).

13. The device as claimed in one of claims 1 to 12, **characterized in that** the spiral portion (18) is configured with a constantly curved spiral shape of the nature of a round spiral.

14. The device as claimed in one of claims 1 to 12, **characterized in that** the spiral portion is elongate in the manner of an oval spiral, in particular with straight portions which connect the spiral arcs.

15. The device as claimed in claim 7, **characterized in that** the chain links of the energy chain have firstly, at least in the second sub-portion, a swivel angle limit stop at each articulated joint such that the second sub-portion has a bending radius in the direction of rotation of the spiral which is less than or equal to the innermost curvature of the spiral portion, and, secondly, an extension angle limit stop such that the second sub-portion extends in extended manner in the opposite direction of rotation.

16. The device as claimed in claim 7 or 8, **characterized in that** the spiral portion has an inlet and the length of the second sub-portion at least corresponds to the distance between the axis of rotation of the rotary feedthrough and the inlet.

17. The device as claimed in one of claims 1 to 16, **characterized in that** a drive, in particular an electric motor, is in operative connection with the flexible body (12) .

18. The device as claimed in one of claims 1 to 17, **characterized in that** the flexible body (12) is used as
- a drive chain or cable to transmit thrust and/or tensile force in a machine;
- a roller shutter for a machine cover; or
- a slatted roller shutter of a high-speed lifting door.

## Revendications

1. Un dispositif de levage à haute vitesse pour un corps (12) allongé et flexible, le dispositif ayant au moins une ligne d'alimentation et comprenant
un guidage (10) pour le déplacement guidé du corps, comportant un tronçon en spirale (18), dans lequel au moins une partie du corps peut être logée de manière compacte dans plusieurs voies espacées qui ne sont pas en contact mutuel et qui s'étendent en spirale vers l'intérieur, le guidage comportant deux profils de guidage (40) disposés parallèlement l'un en face de l'autre, dont le tracé définit le tronçon en spirale (18) et un tronçon linéaire (16A ; 16B) qui lui fait suite, le corps (12) comportant un guide de ligne (20) pour l'au moins une ligne d'alimentation, dans lequel le guide de ligne comprend
- un premier tronçon partiel (21) qui est guidé dans le tronçon en spirale et comporte des pivots (26), des rouleaux ou analogues faisant saillie latéralement des deux côtés et qui sont guidés par glissement ou par roulement dans les profils de guidage (40), et
- un deuxième tronçon partiel non guidé (22) ayant une première extrémité (23A) qui est connectée au premier tronçon partiel et une deuxième extrémité (23B) qui est connectée à un passage rotatif (30) pour l'au moins une ligne d'alimentation.

2. Dispositif de levage à grande vitesse selon la revendication 1, **caractérisé en ce que** le deuxième tronçon partiel (21) présente un petit rayon de courbure (R1) dans le sens de rotation de la spirale et est configuré avec un grand rayon de courbure (R2) dans le sens de rotation opposé vers l'arrière, de préférence de manière autoportante.

3. Dispositif de levage à grande vitesse selon la revendication 1 ou 2, **caractérisé en ce que** le tronçon en spirale présente une entrée (17) et la longueur du deuxième tronçon partiel (22) correspond au moins à la distance entre l'axe de rotation (A) du passage rotatif (30) et l'entrée (17) .

4. Dispositif de levage à grande vitesse selon la revendication 2 ou 3, **caractérisé en ce que** le deuxième tronçon partiel (22) présente un rayon de courbure (R1) dans le sens de rotation qui est inférieur ou égal à la courbure la plus intérieure du tronçon en spirale.

5. Dispositif de levage à grande vitesse selon l'une des revendications 1 à 4, **caractérisé en ce que** le corps flexible (12) forme le guide de ligne (20) et présente un canal de ligne (24) pour l'au moins une ligne d'alimentation.

6. Dispositif de levage à grande vitesse selon l'une des revendications 1 à 4, **caractérisé en ce que** le guide de ligne est prévu de manière séparée, en particulier sous la forme d'une chaîne porte-câbles (20), et est prévu sur le corps flexible.

7. Dispositif comportant une chaîne porte-câbles (20) pour au moins une ligne d'alimentation et un guidage à grande vitesse (10) comprenant un tronçon en spirale (18) dans lequel au moins une partie de la chaîne porte-câbles (20) peut être logée de manière compacte dans plusieurs voies espacées qui ne sont pas en contact mutuel et s'étendent sensiblement en spirale vers l'intérieur, le guidage comportant deux profils de guidage (40) disposés parallèlement l'un en face de l'autre, dont le tracé définit le tronçon en spirale (18) et un tronçon linéaire (16A; 16B) en aval, la chaîne porte-câbles (20) présentant en particulier plusieurs maillons de chaîne pouvant pivoter les uns par rapport aux autres, qui sont reliés par paires par une articulation et qui forment un canal de ligne (24) pour le guidage protégé de l'au moins une ligne d'alimentation, et la chaîne porte-câbles comprenant en outre
- un premier tronçon partiel (21) qui est guidé dans le tronçon en spirale (18) et qui comporte à chaque fois un certain nombre d'éléments de guidage (26) faisant saillie latéralement des deux côtés et qui sont guidés par glissement ou par roulement dans les profils de guidage (40), et
- un deuxième tronçon partiel non guidée (22) ayant une première extrémité (23A) qui est connectée au premier tronçon partiel et une deuxième extrémité (23B) qui est connectée à un passage rotatif (30) pour l'au moins une ligne d'alimentation.

8. Dispositif selon l'une des revendications 1 à 7, **caractérisé en ce que** le passage rotatif (30) présente un côté de connexion fixe (31) et un côté de connexion rotatif (32) et **en ce que** la deuxième extrémité est connectée de manière solidaire en rotation au côté de connexion rotatif.

9. Dispositif selon l'une des revendications 1 à 8, comprenant en outre au moins une ligne d'alimentation, telle qu'un câble, un tuyau ou similaire, **caractérisé en ce que** le passage rotatif (30) présente un parcours hélicoïdal avec une ou plusieurs premières spires hélicoïdales (34), dans lequel la ligne d'alimentation est enroulée autour d'un axe de rotation (A), avec une ou plusieurs secondes spires hélicoïdales (35), dans lesquelles la ligne d'alimentation est enroulée en sens inverse autour de l'axe de rotation (A), et avec un arc de déviation (36) qui relie les deux spires hélicoïdales et dans lequel la ligne d'alimentation est retournée.

10. Dispositif selon l'une des revendications 1 à 8, **caractérisé en ce que** le passage rotatif (30) est réalisé sous la forme d'un joint tournant pour du gaz ou du liquide, ou d'un dispositif à bague de frottement pour de l'énergie électrique ou des signaux.

11. Dispositif selon l'une des revendications 1 à 10, **caractérisé en ce que** les profilés de guidage (40) ont une section transversale de profilé sensiblement en forme de U.

12. Dispositif selon l'une des revendications 1 à 11, **caractérisé en ce que** le premier tronçon partiel (21) est guidé par le guidage (14) et le deuxième tronçon partiel (22) n'est pas guidé par le guidage (14).

13. Dispositif selon l'une des revendications 1 à 12, **caractérisé en ce que** le tronçon en spirale (18) est configuré avec une forme de spirale constamment incurvée à la façon d'une spirale ronde.

14. Dispositif selon l'une des revendications 1 à 12, **caractérisé en ce que** le tronçon en spirale est allongé à la manière d'une spirale ovale, en particulier avec des sections droites qui relient les arcs de spirale.

15. Dispositif selon la revendication 7, **caractérisé en ce que** les maillons de la chaîne porte-câbles présentent d'une part, au moins dans le deuxième tronçon partiel, une butée d'angle de pivotement à chaque articulation de telle sorte que le deuxième tronçon partiel présente un rayon de courbure dans le sens de rotation de la spirale qui est inférieur ou égal à la courbure la plus intérieure du tronçon en spirale, et d'autre part, une butée d'angle d'extension telle que le deuxième tronçon partiel s'étend de manière étendu dans le sens de rotation opposé.

16. Dispositif selon la revendication 7 ou 8, **caractérisé en ce que** le tronçon en spirale comporte une entrée et **en ce que** la longueur du deuxième tronçon partiel correspond au moins à la distance entre l'axe de rotation du passage rotatif et l'entrée.

17. Dispositif selon l'une des revendications 1 à 16, **caractérisé en ce qu'**un entraînement, en particulier un moteur électrique, est en liaison fonctionnelle avec le corps flexible (12).

18. Le dispositif selon l'une des revendications 1 à 17, **caractérisé en ce que** le corps flexible (12) est utilisé comme
- une chaîne ou un câble d'entraînement pour transmettre la force de poussée et/ou de traction dans une machine ;
- un tablier à éléments articulés pour couverture d'une machine ; ou comme
- un volet roulant à lames d'une porte levante à grande vitesse.
